# EUROPEAN PATENT APPLICATION

(11) **EP 4 672 856 A1**
(43) Date of publication of application: **31.12.2025**
(21) Application number: 25178300.7
(22) Date of filing: 22.05.2025
(51) Int. Cl.: H04W 76/15, H04W 84/12, H04W 88/06, H04L 69/14

(54) **APPARATUS, SYSTEM, AND METHOD OF MULTI-LINK WIRELESS COMMUNICATION**

(30) Priority: 29.06.2024 US 202418759855
(71) Applicant: INTEL Corporation, Santa Clara, CA 95054 (US)
(72) Inventor: BEN-ARI, Danny, 4583600 Tsur Natan, Hasharon Hatichon (IL); ALEXANDER, Danny, 6019000 Neve Efraim Monoson (IL); LIRON, Oded, 30500 Givat-Ada, Haifa (IL); SZANTO, Nadav, 3508417 Haifa (IL); KOJOKARO, Chen, 20692 Yoqneam Illit (IL)
(74) Representative: HGF

(57) **Abstract**

For example, a non-AP MLD may determine whether an EMLSR enablement criterion is met. For example, the EMLSR enablement criterion may be based on one or more predefined enablement criteria corresponding to one or more enablement-criteria parameters. For example, the non-AP MLD may activate operation of the non-AP MLD at an EMLSR operation mode of an MLO over a plurality of links with an AP MLD based on a determination that the EMLSR enablement criterion is met. For example, the non-AP MLD may determine whether an EMLSR disablement criterion is met during the EMLSR operation mode. For example, the EMLSR disablement criterion may be based on one or more predefined disablement criteria corresponding to one or more disablement-criteria parameters. For example, the non-AP MLD may switch the non-AP MLD from the EMLSR operation mode to a non-EMLSR MLO mode based on a determination that the EMLSR disablement criterion is met.

## Description

### BACKGROUND

Devices in a wireless communication system may be configured to communicate over one or more communication links.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a multi-link communication scheme, which may be implemented in accordance with some demonstrative aspects.
Fig. 3 is a schematic illustration of a multi-link communication scheme, which may be implemented in accordance with some demonstrative aspects.
Fig. 4 is a schematic illustration of one or more operations according to an Enhanced Multi Link Single Radio (EMLSR) operation mode to illustrate technical aspects, which may be addressed in accordance with some demonstrative aspects.
Fig. 5 is a schematic illustration of a state diagram to enable/disable an EMLSR operation mode, in accordance with some demonstrative aspects.
Fig. 6 is a schematic flow-chart illustration of a method of multi-link wireless communication, in accordance with some demonstrative aspects.
Fig. 7 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020)* ; and/or IEEE 802.11be (*IEEE P802.11be*/*D5.0 Draft Standard for Information technology-Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), November 2023*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth 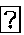 , Global Positioning System (GPS), Wi-Fi, Wi-Max, ZigBeeTM, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated, or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a Wi-Fi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20GHz and 300GHz, for example, a frequency band above 45GHz, e.g., a 60GHz frequency band, and/or any other mmWave frequency band.

Some demonstrative aspects may be used in conjunction with a wireless communication network communicating over the sub-10GHz frequency band and/or the mmWave frequency band, e.g., as described below. However, other aspects may be implemented utilizing any other suitable wireless communication frequency bands, for example, a 5G frequency band, a frequency band below 20GHz, a Sub 1GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16GHz channels. For example, the channel bonding mechanisms may include, for example, a mechanism and/or an operation whereby two or more channels, e.g., 2.16GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32GHz, a channel BW of 6.48GHz, a channel BW of 8.64GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

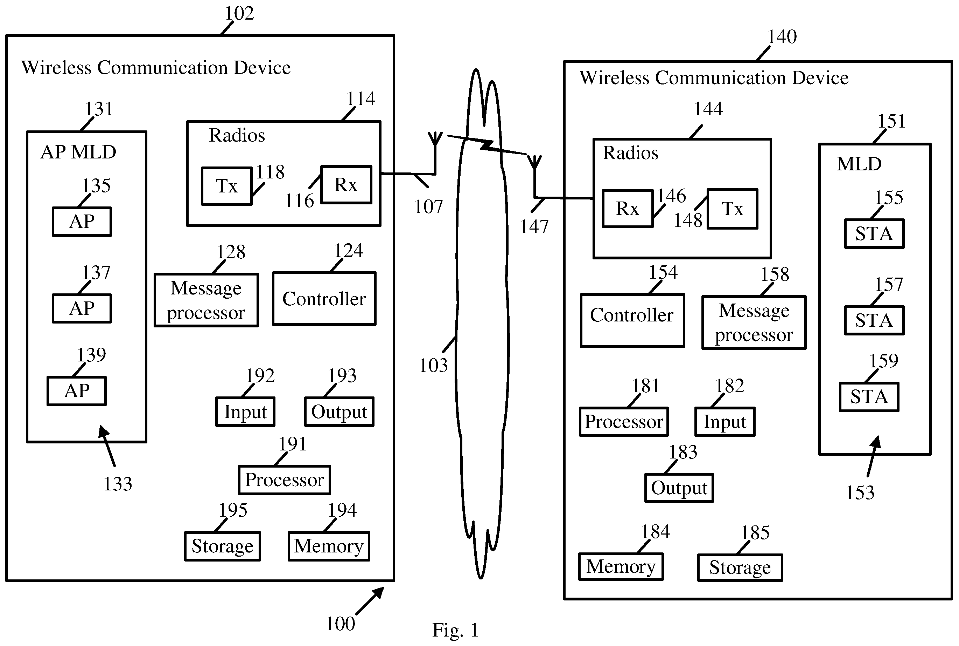

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, and/or one or more other devices.

In some demonstrative aspects, devices 102 and/or 140 may include a mobile device or a non-mobile, e.g., a static, device.

For example, devices 102 and/or 140 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102 and/or 140 may be capable of communicating content, data, information and/or signals via a wireless medium (WM) 103. In some demonstrative aspects, wireless medium 103 may include, for example, a radio channel, an RF channel, a Wi-Fi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band.

In other aspects, WM 103 may include any other type of channel over any other frequency band.

In some demonstrative aspects, device 102 and/or device 140 may include one or more radios including circuitry and/or logic to perform wireless communication between devices 102, 140 and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or the one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102 and/or device 140 may include, operate as, perform the role of, and/or perform one or more functionalities of, one or more STAs. For example, device 102 may include at least one STA and/or device 140 may include at least one STA.

In some demonstrative aspects, device 102 and/or device 140 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102 and/or device 140 may be configured to perform one or more operations, and/or functionalities of a Wi-Fi 8 STA.

In other aspects, for example, devices 102 and/or 140 may be configured to perform one or more operations, and/or functionalities of an Ultra High Reliability (UHR) STA.

In other aspects, for example, devices 102 and/or 140 may be configured to perform one or more operations, and/or functionalities of any other additional or alternative type of STA.

In other aspects, device 102 and/or device 140 may include, operate as, perform the role of, and/or perform one or more functionalities of, any other wireless device and/or station, e.g., a WLAN STA, a Wi-Fi STA, and the like.

In some demonstrative aspects, device 102 and/or device 140 may be configured operate as, perform the role of, and/or perform one or more functionalities of, an access point (AP), e.g., an EHT AP STA and/or a UHR AP STA.

In some demonstrative aspects, device 102 and/or device 140 may be configured to operate as, perform the role of, and/or perform one or more functionalities of, a non-AP STA, e.g., an EHT non-AP STA and/or a UHR non-AP STA.

In other aspects, device 102 and/or device 140 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF).The AP may perform any other additional or alternative functionality.

In some demonstrative aspects devices 102 and/or 140 may be configured to communicate in an EHT network, a UHR network, and/or any other network.

In some demonstrative aspects, devices 102 and/or 140 may be configured to operate in accordance with one or more Specifications, for example, including one or more *IEEE 802.11 Specifications,* e.g., an *IEEE 802.11-2020 Specification,* an *IEEE 802.11be Specification,* and/or any other specification and/or protocol.

In some demonstrative aspects, device 102 and/or device 140 may include, operate as, perform a role of, and/or perform the functionality of, one or more multi-link logical entities, e.g., as described below.

In other aspect, device 102 and/or device 140 may include, operate as, perform a role of, and/or perform the functionality of, any other entities, e.g., which are not multi-link logical entities.

For example, a multi-link logical entity may include a logical entity that contains one or more STAs. The logical entity may have one MAC data service interface and primitives to the logical link control (LLC) and a single address associated with the interface, which can be used to communicate on a distribution system medium (DSM). For example, the DSM may include a medium or set of media used by a distribution system (DS) for communications between APs, mesh gates, and the portal of an extended service set (ESS). For example, the DS may include a system used to interconnect a set of basic service sets (BSSs) and integrated local area networks (LANs) to create an extended service set (ESS). In one example, a multi-link logical entity may allow STAs within the multi-link logical entity to have the same MAC address. The multi-link entity may perform any other additional or alternative functionality.

In some demonstrative aspects, device 102 and/or device 140 may include, operate as, perform a role of, and/or perform the functionality of, a Multi-Link Device (MLD). For example, device 102 may include, operate as, perform a role of, and/or perform the functionality of, at least one MLD, and/or device 140 may include, operate as, perform a role of, and/or perform the functionality of, at least one MLD, e.g., as described below.

For example, an MLD may include a device that is a logical entity that is capable of supporting more than one affiliated station (STA) and can operate using one or more affiliated STAs. For example, the MLD may present one Medium Access Control (MAC) data service and a single MAC Service Access Point (SAP) to the Logical Link Control (LLC) sublayer. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102 and/or device 140 may be configured to operate as, perform the role of, and/or perform one or more functionalities of, an AP MLD.

In some demonstrative aspects, device 102 and/or device 140 may be configured to operate as, perform the role of, and/or perform one or more functionalities of, a non-AP MLD.

In other aspects, device 102 and/or device 140 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In one example, a multi-link infrastructure framework may be configured as an extension from a one link operation between two STAs, e.g., an AP and a non-AP STA.

In some demonstrative aspects, controller 124 may be configured to cause, trigger, instruct and/or control device 102 to operate as, perform a role of, and/or perform one or more operations and/or functionalities of, an AP MLD 131 including a plurality of AP STAs 133, e.g., including an AP STA 135, an AP STA 137 and/or an AP STA 139. In some aspects, as shown in Fig. 1, AP MLD 131 may include three AP STAs. In other aspects, AP MLD 131 may include any other number of AP STAs.

In one example, AP STA 135, AP STA 137 and/or AP STA 139 may operate as, perform a role of, and/or perform one or more operations and/or functionalities of, an EHT AP STA. In other aspects, AP STA 135, AP STA 137 and/or AP STA 139 may perform any other additional or alternative functionality.

In some demonstrative aspects, for example, the one or more radios 114 may include, for example, a radio for communication by AP STA 135 over a first wireless communication frequency channel and/or frequency band, e.g., a 2.4GHz band, as described below.

In some demonstrative aspects, for example, the one or more radios 114 may include, for example, a radio for communication by AP STA 137 over a second wireless communication frequency channel and/or frequency band, e.g., a 5GHz band, as described below.

In some demonstrative aspects, for example, the one or more radios 114 may include, for example, a radio for communication by AP STA 139 over a third wireless communication frequency channel and/or frequency band, e.g., a 6GHz band, as described below.

In some demonstrative aspects, the radios 114 utilized by APs 133 may be implemented as separate radios. In other aspects, the radios 114 utilized by APs 133 may be implemented by one or more shared and/or common radios and/or radio components.

In other aspects, controller 124 may be configured to cause, trigger, instruct and/or control device 102 to operate as, perform a role of, and/or perform one or more operations and/or functionalities of, any other additional or alternative entity and/or STA, e.g., a single STA, multiple STAs, and/or a non-MLD entity.

In some demonstrative aspects, controller 154 may be configured to cause, trigger, instruct and/or control device 140 to operate as, perform a role of, and/or perform one or more operations and/or functionalities of, an MLD 151 including a plurality of STAs 153, e.g., including a STA 155, a STA 157 and/or a STA 159. In some aspects, as shown in Fig. 1, MLD 151 may include three STAs. In other aspects, MLD 151 may include any other number of STAs.

In one example, STA 155, STA 157 and/or STA 159 may operate as, perform a role of, and/or perform one or more operations and/or functionalities of, an EHT STA. In other aspects, STA 155, STA 157 and/or STA 159 may perform any other additional or alternative functionality.

In some demonstrative aspects, for example, the one or more radios 144 may include, for example, a radio for communication by STA 155 over a first wireless communication frequency channel and/or frequency band, e.g., a 2.4GHz band, as described below.

In some demonstrative aspects, for example, the one or more radios 144 may include, for example, a radio for communication by STA 157 over a second wireless communication frequency channel and/or frequency band, e.g., a 5GHz band, as described below.

In some demonstrative aspects, for example, the one or more radios 144 may include, for example, a radio for communication by STA 159 over a third wireless communication frequency channel and/or frequency band, e.g., a 6GHz band, as described below.

In some demonstrative aspects, the radios 144 utilized by STAs 153 may be implemented as separate radios. In other aspects, the radios 144 utilized by STAs 153 may be implemented by one or more shared and/or common radios and/or radio components.

In some demonstrative aspects, controller 154 may be configured to cause, trigger, instruct and/or control MLD 151 to operate as, perform a role of, and/or perform one or more operations and/or functionalities of, a non-AP MLD. For example, STA 155, STA 157 and/or STA 159 may operate as, perform a role of, and/or perform one or more operations and/or functionalities of, a non-AP EHT STA.

In some demonstrative aspects, controller 154 may be configured to cause, trigger, instruct and/or control MLD 151 to operate as, perform a role of, and/or perform one or more operations and/or functionalities of, an AP MLD. For example, STA 155, STA 157 and/or STA 159 may operate as, perform a role of, and/or perform one or more operations and/or functionalities of, an AP EHT STA.

In other aspects controller 154 may be configured to cause, trigger, instruct and/or control device 140 to operate as, perform a role of, and/or perform one or more operations and/or functionalities of, any other additional or alternative entity and/or STA, e.g., a single STA, multiple STAs, and/or a non-MLD entity.

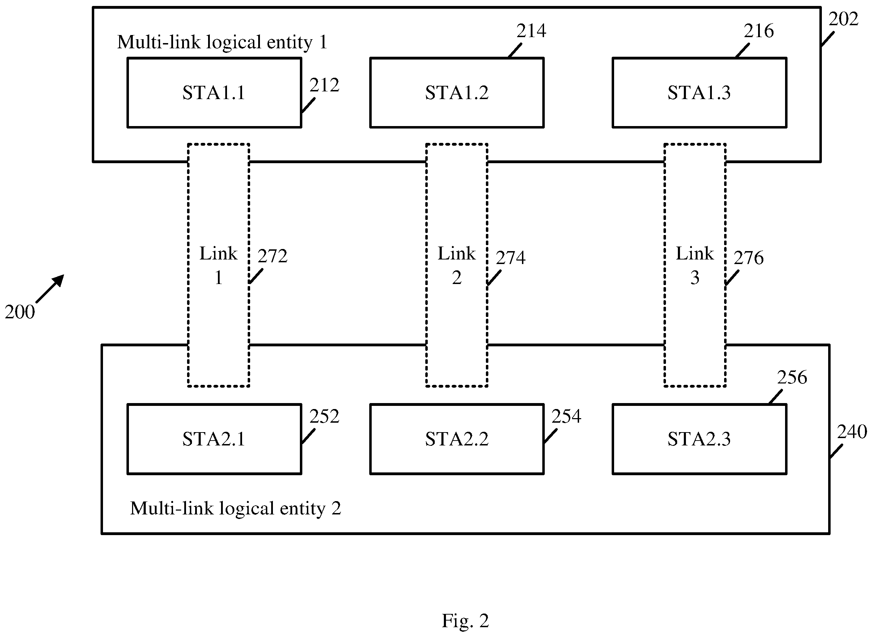

Reference is made to Fig. 2, which schematically illustrates a multi-link communication scheme 200, which may be implemented in accordance with some demonstrative aspects.

As shown in Fig. 2, a first multi-link logical entity 202 ("multi-link logical entity 1"), e.g., a first MLD, may include a plurality of STAs, e.g., including a STA 212, a STA 214, and a STA 216. In one example, AP MLD 131 (Fig. 1) may perform one or more operations, one or more functionalities, the role of, and/or the functionality of, multi-link logical entity 202.

As shown in Fig. 2, a second multi-link logical entity 240 ("multi-link logical entity 2"), e.g., a second MLD, may include a plurality of STAs, e.g., including a STA 252, a STA 254, and a STA 256. In one example, MLD 151 (Fig. 1) may perform one or more operations, one or more functionalities, the role of, and/or the functionality of, multi-link logical entity 240.

As shown in Fig. 2, multi-link logical entity 202 and multi-link logical entity 240 may be configured to form, setup and/or communicate over a plurality of links, for example, including a link 272 between STA212 and STA252, a link 274 between STA 214 and STA254, and/or a link 276 between STA 216 and STA 256.

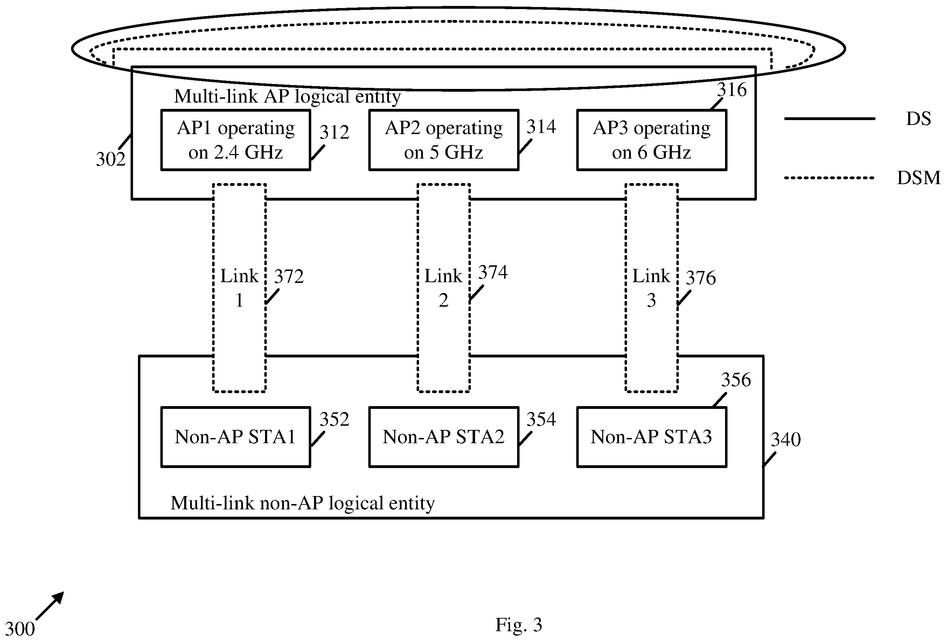

Reference is made to Fig. 3, which schematically illustrates a multi-link communication scheme 300, which may be implemented in accordance with some demonstrative aspects.

As shown in Fig. 3, a multi-link AP logical entity 302, e.g., an AP MLD, may include a plurality of AP STAs, e.g., including an AP STA 312, an AP STA 314, and an AP STA 316. In one example, AP MLD 131 (Fig. 1) may perform one or more operations, one or more functionalities, the role of, and/or the functionality of, multi-link AP logical entity 302.

As shown in Fig. 3, a multi-link non-AP logical entity 340, e.g., a non-AP MLD, may include a plurality of non-AP STAs, e.g., including a non-AP STA 352, a non-AP STA 354, and a non-AP STA 356. In one example, MLD 151 (Fig. 1) may perform one or more operations, one or more functionalities, the role of, and/or the functionality of, multi-link non-AP logical entity 340.

As shown in Fig. 3, multi-link AP logical entity 302 and multi-link non-AP logical entity 340 may be configured to form, setup and/or communicate over a plurality of links, for example, including a link 372 between AP STA 312 and non-AP STA 352, a link 374 between AP STA 314 and non-AP STA 354, and/or a link 376 between AP STA 316 and non-AP STA 356.

For example, as shown in Fig. 3, multi-linkAP logical entity 302 may include a multi-band AP MLD, which may be configured to communicate over a plurality of wireless communication frequency bands. For example, as shown in Fig. 3, AP STA 312 may be configured to communicate over a 2.4GHz frequency band, AP STA 314 may be configured to communicate over a 5GHz frequency band, and/or AP STA 316 may be configured to communicate over a 6GHz frequency band. In other aspects, AP STA 312, AP STA 314, and/or AP STA 316, may be configured to communicate over any other additional or alternative wireless communication frequency bands.

Referring back to Fig. 1, in some demonstrative aspects, device 102 and/or device 140 may be configured to communicate according to a multi-link communication mechanism, e.g., as described below.

In some demonstrative aspects, device 102 and/or device 140 may be configured to communicate according to a multi-link communication mechanism, which may implement one or more operations and/or functionalities for communication at an Enhanced Multilink Single-Radio (EMLSR) operation mode, e.g., in accordance with an *IEEE 802.11 Specification* and/or a Wi-Fi7 Specification, e.g., as described below.

In some demonstrative aspects, the EMLSR operation mode may be defined, e.g., in compliance with an *IEEE 802.11be Specification,* to include a mode of operation that allows a non-AP MLD with multiple receive chains to listen on a set of enabled links, for example, when the corresponding STAs affiliated with the non-AP MLD are in the awake state, for an initial control frame sent by an AP affiliated with an AP MLD. For example, the initial control frame may be sent by the AP in a non-high-throughput (non-HT) (duplicate) PPDU, for example, with one spatial stream. For example, the initial control frame may be followed by one or more frame exchanges on the link on which the initial Control frame was received. In other aspects, the EMLSR operation mode may be defined to include any other additional or alternative suitable functionality.

Some demonstrative aspects are described herein with respect to a wireless communication device, e.g., wireless communication device 102, operating according to an EMLSR operation mode. Other aspects may be implemented with respect to a wireless communication device, e.g., wireless communication device 102, operating according to any other additional or alternative multi-link operation mode.

In some demonstrative aspects, device 102 and/or device 140 may be configured to communicate according to an EMLSR operation mode, which may define that when a non-AP MLD, e.g., a non-AP MLD implemented by device 140, enters an EMLSR mode, the non-AP MLD may have at least two active links.

For example, the non-AP MLD operating at the EMLSR operation mode may be allowed to transmit only over one link at a time.

In some demonstrative aspects, a non-AP MLD, e.g., the non-AP MLD implemented by device 140, may have a first active link and a second active link, which may be configured differently from the first active link, for example, when operating at the EMLSR mode and/or during any other multi-link operation mode.

In some demonstrative aspects, the first active link and the second active link may have different PHY configurations, which may support different PHY rates, e.g., as described below.

In some demonstrative aspects, the first active link may be configured according to a first PHY configuration including a first bandwidth, a first nominal Modulation and Coding Scheme (MCS), a first Transmit (Tx) power limitation setting, and/or one or more first additional or alternative PHY settings.

For example, the first PHY configuration may support a first PHY rate for communication of data, e.g., in an Uplink (UL) transmission to an AP, e.g., an AP implemented by device 102. For example, the first PHY rate may support a first throughput for the UL transmission.

In some demonstrative aspects, the second active link may be configured according to a second PHY configuration including a second bandwidth, a second nominal MCS, a second Tx power limitation setting, and/or one or more second additional or alternative PHY settings.

For example, the second PHY configuration may support a second PHY rate, e.g., different from the first PHY rate, for communication of data, e.g., in an UL transmission to the AP, e.g., the AP implemented by device 102. For example, the second PHY rate may support a second throughput for the UL transmission, e.g., different from the first throughput.

In some demonstrative aspects, device 140 may be configured to implement one or more operations and/or functionalities of a multi-link communication mechanism, which may be configured to address one or more technical issues for communication over multiple links, for example, during the EMLSR operation mode and/or during any other multi-link operation mode, e.g., as described below.

For example, the EMLSR operation mode may be implemented to provide a "cost effective" solution to enable dynamic switching between different links on same or different bands.

For example, the EMLSR operation mode may allow a single radio device with multiple receive chains to listen, for example, using at least one spatial stream, on a set of enabled links. For example, an AP may send to the single radio device an initial control frame with one spatial stream on a particular link of the enabled links. According to this example, the single radio device may detect the initial control frame over the particular link, and may switch to the particular link, e.g., with all its spatial streams, for example, to receive data from the AP, e.g., using all streams.

For example, the AP may perform the functionality of a multi-link multi radio device, which may enable the AP to receive any transmission from any link. According to this example, the AP may receive a data transmission, which is sent by the single radio device, e.g., on any of the enabled links.

In some demonstrative aspects, the EMLSR operation mode may be utilized, for example, to improve Wi-Fi system performance and/or latencies, e.g., at some conditions, use cases, and/or scenarios.

For example, the EMLSR operation mode may be utilized to improve overall Throughput Time (TpT) and/or latency, for example, by utilizing one or more multi-links in a smart way. For example, when one link of a non-AP STA at the EMLSR operation mode is busy, sending data on a second link of the non-AP STA may, e.g., will, increase the TpT and/or reduce the latency, for example, compared to a Multi-link (ML) Single User (SU) STA which may not be allowed to use the other link.

In some demonstrative aspects, for example, in some use cases and/or scenarios, it may be disadvantageous to continuously operate a STA at an EMLSR operation mode, e.g., as described below.

For example, the EMLSR operation mode may have one or more constrains, which may impact overall system TpT, latency, power, and/or any other additional or alternative system performance criteria, for example, in case the EMLSR operation mode is continuously used in all conditions.

For example, there may be one or more conditions and/or constraints that may lead to non-improved, Wi-Fi system performance, for example, when continuously utilizing the EMLSR operation mode.

For example, there may be one or more conditions and/or constraints that may lead to degraded Wi-Fi system performance, e.g., degradation in average throughput, for example, when continuously utilizing the EMLSR operation mode.

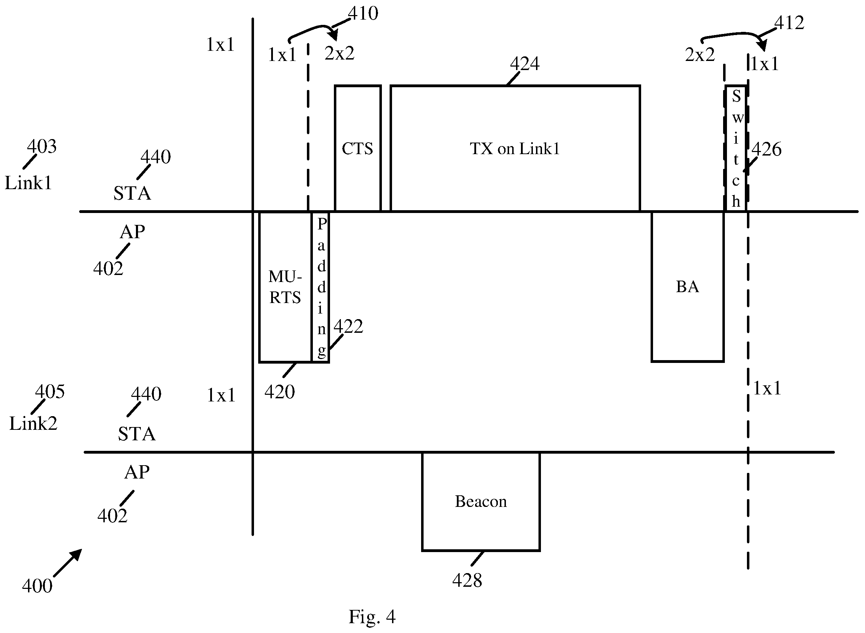

Reference is made to Fig. 4, which schematically illustrates operations 400 according to an EMLSR operation mode to illustrate one or more technical aspects, which may be addressed in accordance with some demonstrative aspects.

For example, the EMLSR operation mode may have one or more constrains, which may lead to performance degradation, e.g., as described below.

For example, continuous operation at the EMLSR operation mode, may result in increased overhead of EMLSR signaling and/or padding duration over the air, e.g., as described below.

For example, continuous operation at the EMLSR operation mode, may result in a frequent occurrence of EMLSR transition delays, e.g., as described below.

For example, as shown in Fig. 4, a STA 440 may operate at an EMLSR operation mode.

For example, STA440 may be at a listen state, which may be characterized by one active link (1x1), e.g., on a link 403.

For example, as shown in Fig. 4, an AP 402 may send to STA440 a trigger frame, e.g., a Multi User (MU) Request-to-Send (RTS) (MU-RTS) 420.

For example, STA 440 may be in the listen state, for example, prior to receiving MU-RTS 420 from AP 402.

For example, STA 440 may move from the listen state to an active state, which may be characterized by at least two active links (2x2).

For example, as indicated by arrow 410, STA 440 may move from the listen state to the active state for a data frame exchange 424.

For example, as shown in Fig. 4, the STA 440 may have an EMLSR transition delay for transitioning from the listen state to the active state. For example, as shown in Fig. 4, the AP 402 may be required to add a padding 442, for example, to account for the transition delay of the STA 440 in moving from the listen state to the active state. This padding 422 may increase EMLSR overhead.

For example, as indicated by arrow 412, STA 440 may switch back to the listen state, for example, after communicating the data frame exchange 424. For example, as shown in Fig. 4, the STA 440 may also have a transition delay 426 in moving back to the listen state after the frame exchange 424.

For example, continuous operation at the EMLSR operation mode, may result in one or more potential beacon frame reception issues.

For example, as shown in Fig. 4, STA440 may miss a beacon 428 on a link 405, for example, when the beacon 428 on the link 405 overlaps with the data frame exchange 424 on the link 403.

For example, continuous operation at the EMLSR operation mode, may result in EMLSR "deafness".

For example, continuous operation at the EMLSR operation mode, may result in a relatively high power consumption. For example, multiple receive chains may be operated when using the EMLSR operation mode. The operation of multiple receive chains may result in increased power consumption, e.g., compared to a non-EMLSR Multi-Link Operation (MLO) mode.

Referring back to Fig. 1, in some demonstrative aspects, device 102 and/or device 140 may be configured to implement one or more operations and/or functionalities of a selective EMLSR enable/disable mechanism, which may be configured to selectively enable an EMLSR operation mode and/or selectively disable the EMLSR operation mode, e.g., as described below.

In some demonstrative aspects, the selective EMLSR enable/disable mechanism may be configured to selectively enable the EMLSR operation mode and/or selectively disable the EMLSR operation mode, for example, according to one or more EMLSR enablement/disablement criteria (also referred to as the "in/out EMLSR transition criteria"), e.g., as described below.

In some demonstrative aspects, the selective EMLSR enable/disable mechanism may include activating operation of a non-AP MLD at an EMLSR operation mode of an MLO over a plurality of links with an AP MLD, for example, based on a determination that an EMLSR enablement criterion is met, e.g., as described below.

In some demonstrative aspects, the selective EMLSR enable/disable mechanism may include switching the non-AP MLD from the EMLSR operation mode to a non-EMLSR MLO mode, for example, based on a determination that an EMLSR disablement criterion is met, e.g., as described below.

In some demonstrative aspects, the EMLSR enablement/disablement criteria may be specific for one or more use cases, e.g., as described below.

In some demonstrative aspects, the EMLSR enablement/disablement criteria may be configured, for example, such that the non-AP MLD may be allowed to select to enable the EMLSR operation mode, for example, in use cases where the EMLSR operation mode may be utilized, for example, to improve overall system TpT, latency, power consumption, and/or any other additional or alternative performance parameter, e.g., as described below.

In some demonstrative aspects, device 102 and/or device 140 may be configured to implement one or more operations and/or functionalities of a selective EMLSR enable/disable mechanism, which may be configured to provide a technical solution to support improved, e.g., optimized, system performance, e.g., as described below.

In some demonstrative aspects, controller 154 may be configured to control, trigger, cause, and/or instruct a non-AP MLD implemented by device 140 to determine whether an EMLSR enablement criterion is met, e.g., as described below.

In some demonstrative aspects, the EMLSR enablement criterion may be based on one or more predefined enablement criteria corresponding to one or more enablement-criteria parameters, e.g., as described below.

In some demonstrative aspects, controller 154 may be configured to control, trigger, cause, and/or instruct the non-AP MLD implemented by device 140 to activate operation of the non-AP MLD at an EMLSR operation mode of an MLO over a plurality of links with an AP MLD, for example, based on a determination that the EMLSR enablement criterion is met, e.g., as described below.

In some demonstrative aspects, controller 154 may be configured to control, trigger, cause, and/or instruct the non-AP MLD implemented by device 140 to determine whether an EMLSR disablement criterion is met, for example, during the EMLSR operation mode, e.g., as described below.

In some demonstrative aspects, the EMLSR disablement criterion may be based on one or more predefined disablement criteria corresponding to one or more disablement-criteria parameters, e.g., as described below.

In some demonstrative aspects, controller 154 may be configured to control, trigger, cause, and/or instruct the non-AP MLD implemented by device 140 to switch the non-AP MLD from the EMLSR operation mode to a non-EMLSR MLO mode, for example, based on a determination that the EMLSR disablement criterion is met, e.g., as described below.

In some demonstrative aspects, controller 154 may be configured to control, trigger, cause, and/or instruct the non-AP MLD implemented by device 140 to transmit an EMLSR enablement indication to the AP MLD, for example, based on the determination that the EMLSR enablement criterion is met, e.g., as described below.

In some demonstrative aspects, controller 154 may be configured to control, trigger, cause, and/or instruct the non-AP MLD implemented by device 140 to transmit an EMLSR disablement indication to the AP MLD, for example, based on the determination that the EMLSR disablement criterion is met, e.g., as described below.

In some demonstrative aspects, controller 154 may be configured to control, trigger, cause, and/or instruct the non-AP MLD implemented by device 140 to determine that the EMLSR enablement criterion is met, for example, based on a determination that a plurality of predefined enablement criteria corresponding to a plurality of predefined enablement-criteria parameters are met, e.g., as described below.

In some demonstrative aspects, controller 154 may be configured to control, trigger, cause, and/or instruct the non-AP MLD implemented by device 140 to determine that the EMLSR enablement criterion is met, for example, based only on a determination that all predefined enablement criteria in the plurality of predefined enablement criteria are met, e.g., as described below.

In some demonstrative aspects, the one or more predefined enablement criteria may include a channel-load-by-others enablement criterion, e.g., as described below.

In some demonstrative aspects, the channel-load-by-others enablement criterion may be based on a channel-load-by-others parameter representing a channel load due to traffic communicated by other devices over a channel used by the non-AP STA for communicating with the AP MLD, e.g., as described below.

In some demonstrative aspects, controller 154 may be configured to control, trigger, cause, and/or instruct the non-AP MLD implemented by device 140 to determine that the channel-load-by-others enablement criterion is met, for example, based on a determination that a value of the channel-load-by-others parameter is greater than a channel-load-by-others threshold, e.g., as described below.

In some demonstrative aspects, the one or more predefined enablement criteria may include a reception-performance enablement criterion, which may be based, for example, on a reception-performance parameter, e.g., as described below.

In some demonstrative aspects, the reception-performance parameter may be configured to represent a performance level for reception of communications from the AP MLD at the non-AP MLD, e.g., as described below.

In some demonstrative aspects, controller 154 may be configured to control, trigger, cause, and/or instruct the non-AP MLD implemented by device 140 to determine that the reception-performance enablement criterion is met, for example, based on a determination that a value of the reception-performance parameter is greater than a reception-performance threshold, e.g., as described below.

In some demonstrative aspects, the one or more predefined enablement criteria may include a power-based enablement criterion, which may be based, for example, on a power-based parameter, e.g., as described below.

In some demonstrative aspects, the power-based parameter may be configured to represent a relationship between a first power consumption level and a second power consumption level, e.g., as described below.

In some demonstrative aspects, the first power consumption level may include a power consumption of the non-AP MLD for communicating a particular traffic with the AP MLD at the EMLSR operation mode, e.g., as described below.

In some demonstrative aspects, the second power consumption level may include a power consumption of the non-AP MLD for communicating the particular traffic with the AP MLD at the non-EMLSR MLO mode, e.g., as described below.

In some demonstrative aspects, controller 154 may be configured to control, trigger, cause, and/or instruct the non-AP MLD implemented by device 140 to determine that the power-based enablement criterion is met, for example, based on a determination that a value of the power-based parameter represents a situation where the first power consumption level is less than the second power consumption level, e.g., as described below.

In some demonstrative aspects, the one or more predefined enablement criteria may include a latency-based enablement criterion, which may be based, for example, on a latency-based parameter, e.g., as described below.

In some demonstrative aspects, the latency-based parameter may be configured to represent a relationship between a first latency and a second latency, e.g., as described below.

In some demonstrative aspects, the first latency may include a latency for communicating a particular traffic with the AP MLD at the EMLSR operation mode, e.g., as described below.

In some demonstrative aspects, the second latency may include a latency for communicating the particular traffic with the AP MLD at the non-EMLSR MLO mode, e.g., as described below.

In some demonstrative aspects, controller 154 may be configured to control, trigger, cause, and/or instruct the non-AP MLD implemented by device 140 to determine that the latency-based enablement criterion is met, for example, based on a determination that a value of the latency-based parameter represents a situation where the first latency is less than the second latency, e.g., as described below.

In some demonstrative aspects, the one or more predefined enablement criteria may include a self-interference enablement criterion, which may be based, for example, on a self-interference parameter, e.g., as described below.

In some demonstrative aspects, the self-interference parameter may indicate whether self-interference from at least one co-located component of the non-AP MLD is present over at least one of the plurality of links, e.g., as described below.

In some demonstrative aspects, the at least one co-located component may include a co-located wireless communication interface, e.g., as described below.

In some demonstrative aspects, the at least one co-located component may include a co-located electric circuit clock, e.g., as described below.

In other aspects, the at least one co-located component may include any other additional or alternative component.

In some demonstrative aspects, controller 154 may be configured to control, trigger, cause, and/or instruct the non-AP MLD implemented by device 140 to determine that the self-interference enablement criterion is met, for example, based on a determination that the self-interference parameter indicates that there is no self-interference over any of the plurality of links, e.g., as described below.

In some demonstrative aspects, the one or more predefined enablement criteria may include an operation-mode enablement criterion, which may be based, for example, on an operation-mode parameter, e.g., as described below.

In some demonstrative aspects, the operation-mode parameter may be configured to indicate whether wireless communication with other devices is to be performed over at least one of the plurality of links, e.g., as described below.

In some demonstrative aspects, controller 154 may be configured to control, trigger, cause, and/or instruct the non-AP MLD implemented by device 140 to determine that the operation-mode enablement criterion is met, for example, based on a determination that the operation-mode parameter indicates that no wireless communication with other devices is to be performed over any of the plurality of links, e.g., as described below.

In some demonstrative aspects, controller 154 may be configured to control, trigger, cause, and/or instruct the non-AP MLD implemented by device 140 to determine that the EMLSR disablement criterion is met, for example, based on a determination that at least one predefined disablement criterion in a plurality of predefined disablement criteria is met, e.g., as described below.

In some demonstrative aspects, the one or more predefined disablement criteria may include a channel-load-by-others disablement criterion, which, may be based, for example, on a channel-load-by-others parameter, e.g., as described below.

In some demonstrative aspects, the channel-load-by-others parameter may be configured to represent a channel load due to traffic communicated by other devices over a channel used by the non-AP STA for communicating with the AP MLD, e.g., as described below.

In some demonstrative aspects, controller 154 may be configured to control, trigger, cause, and/or instruct the non-AP MLD implemented by device 140 to determine that the channel-load-by-others disablement criterion is met, for example, based on a determination that a value of the channel-load-by-others parameter is lower than a channel-load-by-others threshold, e.g., as described below.

In some demonstrative aspects, the one or more predefined disablement criteria may include a reception-performance disablement criterion, which, may be based, for example, on a reception-performance parameter, e.g., as described below.

In some demonstrative aspects, the reception-performance parameter may be configured to represent a performance level for reception of communications from the AP MLD at the non-AP MLD, e.g., as described below.

In some demonstrative aspects, controller 154 may be configured to control, trigger, cause, and/or instruct the non-AP MLD implemented by device 140 to determine that the reception-performance disablement criterion is met, for example, based on a determination that a value of the reception performance parameter is lower than a reception performance threshold, e.g., as described below.

In some demonstrative aspects, the one or more predefined disablement criteria may include a power-based disablement criterion, which may be based, for example, on a power-based parameter, e.g., as described below.

In some demonstrative aspects, the power-based parameter may be configured to represent a relationship between a first power consumption level and a second power consumption level, e.g., as described below.

In some demonstrative aspects, the first power consumption level may include a power consumption of the non-AP MLD for communicating a particular traffic with the AP MLD at the EMLSR operation mode, e.g., as described below.

In some demonstrative aspects, the second power consumption level may include a power consumption of the non-AP MLD for communicating the particular traffic with the AP MLD at the non-EMLSR MLO mode, e.g., as described below.

In some demonstrative aspects, controller 154 may be configured to control, trigger, cause, and/or instruct the non-AP MLD implemented by device 140 to determine that the power-based disablement criterion is met, for example, based on a determination that a value of the power-based parameter represents a situation where the second power consumption level is less than the first power consumption level, e.g., as described below.

In some demonstrative aspects, the one or more predefined disablement criteria may include a latency-based disablement criterion, which may be based, for example, on a latency-based parameter, e.g., as described below.

In some demonstrative aspects, the latency-based parameter may be configured to represent a relationship between a first latency and a second latency, e.g., as described below.

In some demonstrative aspects, the first latency may include a latency for communicating a particular traffic with the AP MLD at the EMLSR operation mode, e.g., as described below.

In some demonstrative aspects, the second latency may include a latency for communicating the particular traffic with the AP MLD at the non-EMLSR MLO mode, e.g., as described below.

In some demonstrative aspects, controller 154 may be configured to control, trigger, cause, and/or instruct the non-AP MLD implemented by device 140 to determine that the latency-based disablement criterion is met, for example, based on a determination that a value of the latency-based parameter represents a situation where the second latency is less than the first latency, e.g., as described below.

In some demonstrative aspects, the one or more predefined disablement criteria may include a self-interference disablement criterion, which may be based, for example, on a self-interference parameter, e.g., as described below.

In some demonstrative aspects, the self-interference parameter may be configured to indicate whether self-interference from at least one co-located component of the non-AP MLD is present over at least one of the plurality of links, e.g., as described below.

In some demonstrative aspects, the at least one co-located component may include a co-located wireless communication interface, e.g., as described below.

In some demonstrative aspects, the at least one co-located component may include a co-located electric circuit clock, e.g., as described below.

In other aspects, the at least one co-located component may include any other component.

In some demonstrative aspects, controller 154 may be configured to control, trigger, cause, and/or instruct the non-AP MLD implemented by device 140 to determine that the self-interference disablement criterion is met, for example, based on a determination that the self-interference parameter indicates that there is self-interference over at least one of the plurality of links, e.g., as described below.

In some demonstrative aspects, the one or more predefined disablement criteria may include an operation-mode disablement criterion, which may be based, for example, on an operation-mode parameter, e.g., as described below.

In some demonstrative aspects, the operation-mode parameter may be configured to indicate whether wireless communication with other devices is to be performed over at least one of the plurality of links, e.g., as described below.

In some demonstrative aspects, controller 154 may be configured to control, trigger, cause, and/or instruct the non-AP MLD implemented by device 140 to determine that the operation-mode disablement criterion is met, for example, based on a determination that the operation-mode parameter indicates that wireless communication with other devices is to be performed over at least one of the plurality of links, e.g., as described below.

In some demonstrative aspects, controller 154 may be configured to control, trigger, cause, and/or instruct the non-AP MLD implemented by device 140 to monitor the one or more disablement-criteria parameters, e.g., in real time, for example, during operation of the non-AP MLD at the EMLSR operation mode, e.g., as described below.

In some demonstrative aspects, controller 154 may be configured to control, trigger, cause, and/or instruct the non-AP MLD implemented by device 140 to monitor the one or more enablement-criteria parameters, e.g., in real time, for example, during operation of the non-AP MLD at the non-EMLSR MLO mode, e.g., as described below.

In some demonstrative aspects, controller 154 may be configured to control, trigger, cause, and/or instruct the non-AP MLD implemented by device 140 to determine that the EMLSR enablement criterion is met, for example, based only on a determination that all predefined enablement criteria in a plurality of predefined enablement criteria are met, e.g., as described below.

In some demonstrative aspects, controller 154 may be configured to control, trigger, cause, and/or instruct the non-AP MLD implemented by device 140 to determine that the EMLSR disablement criterion is met, for example, based on a determination that at least one predefined disablement criterion in a plurality of predefined disablement criteria is met, e.g., as described below.

In some demonstrative aspects, device 102 and/or device 140 may be configured to implement one or more operations and/or functionalities of a selective EMLSR enable/disable mechanism, which may be configured to dynamically enable/disable an EMLSR operation mode, for example, based on one or more EMLSR enable/disable criteria, e.g., as described below.

In some demonstrative aspects, device 102 and/or device 140 may be configured to implement one or more operations and/or functionalities of a selective EMLSR enable/disable mechanism, which may be configured to dynamically enable an EMLSR operation mode, for example, based on a determination that an EMLSR enablement criterion is met, e.g., as described below.

In some demonstrative aspects, device 102 and/or device 140 may be configured to implement one or more operations and/or functionalities of a selective EMLSR enable/disable mechanism, which may be configured to dynamically disable the EMLSR operation mode, for example, based on a determination that an EMLSR disablement criterion is met, e.g., as described below.

In some demonstrative aspects, the selective EMLSR enable/disable mechanism may be configured to enable the EMLSR operation mode, for example, when one or more, e.g., some or all, EMLSR enablement criteria (also referred to as "in-transition criteria") are met, e.g., as described below.

In some demonstrative aspects, the selective EMLSR enable/disable mechanism may be configured to enable the EMLSR operation mode, for example, only when or all of the in-transition criteria are fulfilled, e.g., as described below.

In some demonstrative aspects, the selective EMLSR enable/disable mechanism may be configured to disable the EMLSR operation mode, for example, when at least one EMLSR disablement criterion (also referred to as "out-transition criterion") is met, e.g., as described below.

In some demonstrative aspects, the selective EMLSR enable/disable mechanism may be configured to exit the EMLSR operation mode, e.g., in case the EMLSR operation mode is active, or to select not to enter the EMLSR operation mode, e.g., in case the EMLSR operation mode is not active, for example, when at least one out-transition criterion is fulfilled, e.g., as described below.

In some demonstrative aspects, the one or more EMLSR enablement/disablement criteria, which may be implemented by the selective EMLSR enable/disable mechanism, may include, for example, a channel-load-by-others enablement/disablement criterion, which may be based, for example, on a channel-load-by-others parameter ("Channel Load (occupancy) by Others"), which may represent a channel load due to traffic communicated by other devices over a channel used by a non-AP MLD for communicating with an AP MLD.

In one example, a non-AP MLD, e.g., a non-AP MLD implemented by device 140, may measure Wi-Fi components, which may be used to determine the "Channel Load (occupancy) by Others" parameter, on a link, which may be used in a non-EMLSR MLO mode, e.g., in an ML SU mode, for example, when the non-AP MLD is running at the non-EMLSR MLO mode.

In another example, a non-AP MLD, e.g., a non-AP MLD implemented by device 140, may determine the "Channel Load (occupancy) by Others" parameter, for example, based on a received AP channel load measurement, which may be advertised in a beacon transmitted by an AP. For example, the channel load from the AP may be based on, or may take into account, traffic from the non-AP MLD. For example, the non-AP MLD may be configured to determine the "Channel Load by Others" parameter, for example, by subtracting the traffic of the non-AP MLD from the AP channel load measurement.

For example, EMLSR TpT overheads and/or an EMLSR deafness may result in a reduced EMLSR TpT, e.g., during the EMLSR operation mode, for example, compared to a non-EMLSR MLO mode. According to this example, when there is some channel load on a first link, the EMLSR operation mode may gain more TpT from a second link.

In some demonstrative aspects, the non-AP MLD, e.g., a non-AP MLD implemented by device 140, may determine whether a channel-load-by-others criterion is met, for example, based on a comparison between a value of the channel-load-by-others parameter and a channel-load-by-others threshold, e.g., as described below.

For example, in case a non-AP MLD is running in the non-EMLSR MLO mode over a link, and in that "Channel Load by Others" = X, then the non-AP MLD may be expected to have degradation in a maximum TpT on this link.

In one example, it may be defined that a non-AP MLD, e.g., a non-AP MLD implemented by device 140, is to select not to operate at the EMLSR operation mode (don't enter the EMLSR operation mode), for example, when the value of the channel-load-by-others parameter is equal to or lower than a channel-load-by-others threshold (MIN EMLSR CHANNEL LOAD threshold), e.g., when "Channel Load by Others" <= MIN EMLSR CHANNEL LOAD threshold.

For example, the non-AP MLD, e.g., the non-AP MLD implemented by device 140, may select not to operate at the EMLSR operation mode (don't enter the EMLSR operation mode), for example, by staying at the non-EMLSR MLO mode, e.g., in case already at the non-EMLSR MLO mode, or exiting the EMLSR mode, e.g., in case already at the EMLSR operation mode.

For example, the MIN EMLSR CHANNEL LOAD threshold may be configured to represent the minimum channel load that, if moving to the EMLSR operation mode, is not expected to, e.g., will not, improve the TpT, for example, due to degradation of EMLSR standard overheads, medium synchronization, failures to switch to another link, and/or any other technical effects.

In one example, it may be defined that the non-AP MLD, e.g., the non-AP MLD implemented by device 140, is to be allowed to operate at the EMLSR operation mode, for example, when the value of the channel-load-by-others parameter is greater than the channel-load-by-others threshold (MIN EMLSR CHANNEL LOAD threshold), e.g., when "Channel Load by Others" > MIN EMLSR CHANNEL LOAD threshold. For example, the non-AP MLD may be allowed to operate the EMLSR operation mode, for example, under the assumption that the EMLSR operation mode utilizing two links may gain better results.

For example, the non-AP MLD, e.g., the non-AP MLD implemented by device 140, may be configured to collect channel load results over time, and to make a decision every time period, denoted T.

For example, the channel load results may be filtered with filters such as, for example, an average filter and/or a filter, which gives more gain to latest results compared to older results. According to this example, an outcome of the filter may be compared to the MIN EMLSR CHANNEL LOAD threshold.

For example, a non-AP MLD, e.g., a non-AP MLD implemented by device 140, which supports selective enabling/disabling of the EMLSR operation mode based on the channel-load-by-others parameter, may select not to enter the EMLSR operation mode, for example, in case:
- Relatively good conditions, for example, where Received Signal Strength Indicator (RSSI) > -60 decibel-milliwatts (dBm), with medium to high traffic on a link in a band supported by the non-AP MLD, e.g., a 5G Wi-Fi band and/or a 6G Wi-Fi band, and/or other bands; and
- A detected channel-load-by-others of about 0, which may represent a situation of traffic only between the non-AP MLD and an AP, e.g., without interference.

For example, the non-AP MLD, e.g., a non-AP MLD implemented by device 140, which supports selective enabling/disabling of the EMLSR operation mode based on the channel-load-by-others parameter, may select to enter the EMLSR operation mode, for example, in case:
- The channel load by others is increased, e.g., by other STA(s), which transmit or receive over the same link.

In some demonstrative aspects, the one or more EMLSR enablement/disablement criteria, which may be implemented by the selective EMLSR enable/disable mechanism, may include, for example, a reception-performance enablement/disablement criterion (Good or Bad Reception criterion), which may be based, for example, on a reception-performance parameter representing a performance level for reception of communications from an AP MLD at a non-AP MLD.

In some demonstrative aspects, a non-AP MLD, e.g., a non-AP MLD implemented by device 140, may determine that the reception-performance enablement criterion is met, for example, based on a determination that a value of the reception-performance parameter is greater than a reception-performance threshold.

For example, the non-AP MLD may enter the EMLSR operation mode, for example, when the value of the reception-performance parameter is greater than the reception-performance threshold.

For example, the reception-performance threshold may be set to indicate a relatively high performance level for the reception of communications from the AP MLD at the non-AP MLD.

In some demonstrative aspects, the non-AP MLD, e.g., the non-AP MLD implemented by device 140, may determine that the reception-performance disablement criterion is met, for example, based on a determination that a value of the reception performance parameter is lower than the reception performance threshold.

For example, the non-AP MLD may switch from the EMLSR operation mode to a non-EMLSR MLO mode, e.g., an ML SU operation mode, or may select to remain in the non-EMLSR MLO mode, for example, when the value of the reception-performance parameter is lower than the reception-performance threshold, which may indicate a relatively low performance level for the reception of communications from the AP MLD at the non-AP MLD.

For example, the reception-performance enablement criterion (Good Reception) may be identified based on one or more of the following parameters:
- An RSSI level may be above a predefined RSSI threshold (GOOD RSSI Threshold);
- There may be substantially no missed beacons;
- A data rate may be above a data rate threshold (GOOD DATA RATE Threshold), and a Packet Error Rate (PER) may be lower than a PER threshold (GOOD PER Threshold). For example, the data rate may be measured as a function of MCS, Number of Spatial Streams (NSS), Guard Interval (GI), BW and/or any other additional or alternative parameter.

For example, the reception-performance disablement criterion (Bad reception) may be identified based on one or more of the following parameters:
- An RSSI level may be below a predefined RSSI threshold (BAD RSSI Threshold);
- There may be missed beacons detected on one of EMLSR links or on both links;
- A data rate may be below a data rate threshold (BAD DATA RATE Threshold), and a PER may be lower than a PER threshold (LOW PER Threshold). For example, data rate may be measured as a function of MCS, NSS, GI, BW and/or any other additional or alternative parameter. For example, in this case, switching to two spatial streams, e.g., via two antennas, may, e.g., will, improve the reception of communications at the non-AP MLD.

For example, in case of missed beacons during the EMLSR operation mode, it may be identified whether the beacon wasn't received due to bad reception conditions or due to an EMLSR beacon reception constraint.

For example, the non-AP MLD, e.g., the non-AP MLD implemented by device 140, may be configured to collect reception-performance results over time, and to make a decision every time period, e.g., a time period T.

For example, the reception-performance results may be filtered with one or more filters such as, for example, an average filter and/or a filter, which gives more gain to latest results compared to older results. According to this example, an outcome of the filter may be compared to the "Good Reception" threshold and/or to the "Bad Reception" threshold for example, to identify whether the reception-performance enablement/disablement criterion is met. For example, the reception-performance enablement/disablement criterion may be based on whether the performance level for reception of communications from the AP MLD at the non-AP MLD is identified as a "Good Reception" or a "Bad Reception".

For example, a non-AP MLD, e.g., a non-AP MLD implemented by device 140, which supports selective enabling/disabling of the EMLSR operation mode based on the channel-load-by-others parameter, may select to exit the EMLSR operation mode, for example, in case attenuation is added to the link, and/or the non-AP MLD is moved away from the AP MLD, for example, until the RSSI over the link becomes low.

In some demonstrative aspects, the one or more EMLSR enablement/disablement criteria, which may be implemented by the selective EMLSR enable/disable mechanism, may include, for example, a traffic per link criterion, which may be used in an EMLSR operation mode, e.g., as an out transition criteria.

For example, the traffic per link criterion may be based on a traffic per link parameter, which may verify whether traffic between an AP MLD and a non-AP MLD is spread over two links of the non-AP MLD, or is mainly or entirely on one of the links.

For example, the traffic over the links may be measured in various ways. For example, the traffic may be measured, for example, as a count of Tx and/or Rx bytes per link, a count of PPDU transmissions and/or receptions per link, a count of frames per link, and/or based on any other additional or alternative parameter.

For example, the traffic may be affected, e.g., directly affected, by a data rate, e.g., as measured by MCS, NSS, GI, and/or BW. According to this example, a link with a higher data rate may be, e.g., will be, able to transfer more data.

For example, it may be determined that one of the links of the non-AP MLD is almost not used, while another one of the links of the non-AP MLD is used most of the time, for example, when a value of a traffic percentage on link parameter is less than a traffic per link percentage threshold (MIN TRAFFIC PERCENTAGE ON ONE LINK THR), e.g., traffic percentage on link < MIN TRAFFIC PERCENTAGE ON ONE LINK THR, or Traffic percentage on Link > (100 - MIN TRAFFIC PERCENTAGE ON ONE LINK THR).

For example, the non-AP MLD may be configured to select to exit the EMLSR operation mode, for example, based on a determination that traffic percentage on link < MIN TRAFFIC PERCENTAGE ON ONE LINK THR, or Traffic percentage on Link > (100 - MIN TRAFFIC PERCENTAGE ON ONE LINK THR).

For example, the traffic per link percentage threshold may be defined, for example, as a function of the traffic. In one example, a first threshold may be defined for latency traffic, while a second threshold may be defined for TpT traffic.

For example, the non-AP MLD, e.g., the non-AP MLD implemented by device 140, may be configured to collect measured traffic results over time, and to make a decision every time period, e.g., a time period T.

For example, the measured traffic results may be filtered with filters such as, for example, an average filter and/or a filter, which gives more gain to latest results compared to older results. According to this example, an outcome of the filters may be compared to the MIN TRAFFIC PERCENTAGE ON ONE LINK threshold and/or to the result of (100- MIN TRAFFIC PERCENTAGE ON ONE LINK THR), for example, to identify whether the non-AP MLD is required to exit the EMLSR operation mode.

In some demonstrative aspects, the one or more EMLSR enablement/disablement criteria, which may be implemented by the selective EMLSR enable/disable mechanism, may include, for example, a power-based enablement criterion, which may be based on a power-based parameter representing a relationship between power consumptions of a non-AP MLD, e.g., a non-AP MLD implemented by device 140, for communicating a particular traffic with an AP MLD at an EMLSR operation mode and at a non-EMLSR MLO mode.

In some demonstrative aspects, the one or more EMLSR enablement/disablement criteria, which may be implemented by the selective EMLSR enable/disable mechanism, may include, for example, a latency-based enablement/disablement criterion based on a latency-based parameter representing a relationship between latencies for communicating a particular traffic with the AP MLD at the EMLSR operation mode and the non-EMLSR MLO mode.

In some demonstrative aspects, the one or more EMLSR enablement/disablement criteria, which may be implemented by the selective EMLSR enable/disable mechanism, may include, for example, power/latency-based enablement/disablement criterion, for example, a power versus TpT criterion, e.g., as described below.

For example, there may be states at which the non-AP MLD may prefer to save power and, accordingly, may prefer to operate at the non-EMLSR mode.

For example, the non-AP MLD may include multiple receive chains, which may be kept open for receiving an initial control frame, for example, during the EMLSR operation mode. According to this example, the non-AP MLD may prefer to move to a low power state, e.g., similar to a legacy SU mode, for example, in order to lower its power consumption level.

For example, the non-AP MLD may stay in the EMLSR operation mode and close one of the links and its corresponding receive chain, for example, by moving the link to a doze state, e.g., by sending a Power Save (PS) indication (PS =1) to an AP. However, this state may not be advantageous, as the non-AP MLD may still be running in the EMLSR operation mode without the benefit of the EMLSR operation mode.

For example, the non-AP MLD may prefer to operate at the EMLSR operation mode, for example, when there is traffic which requires latency, and/or when there is high TpT traffic running on a link with channel load.

For example, it may be determined that a traffic TpT is less than a predefined low traffic threshold (LOW TRAFFIC Threshold), e.g., traffic TpT < LOW TRAFFIC Threshold. According to this example, it may be disadvantageous to be at the EMLSR operation mode, since using more links may consume more power.

For example, the non-AP MLD may determine to operate at the non-EMLSR MLO mode, e.g., at the ML SU mode, for example, when traffic TpT < LOW TRAFFIC Threshold, for example, in order to reduce power consumption.

For example, a non-AP MLD, e.g., a non-AP MLD implemented by device 140, which supports selective enabling/disabling of the EMLSR operation mode based on the channel-load-by-others parameter, may operate at the EMLSR operation mode and may select whether to exit the EMLSR operation mode or to remain at the EMLSR operation mode, for example, based on one or more different TpT scenarios, e.g., no TpT, low TpT, high TpT, voice call, video call, video and voice (teams) scenario, and/or any other additional or alternative scenario.

For example, a non-AP MLD, e.g., a non-AP MLD implemented by device 140, which supports selective enabling/disabling of the EMLSR operation mode based on the channel-load-by-others parameter, may select whether to enter the EMLSR operation mode, e.g., after association with the AP MLD. For example, the non-AP MLD may select whether to enter the EMLSR operation mode or to remain at the EMLSR operation mode, for example, based on data TpT, e.g., in a scenario with good link conditions, e.g., with or without channel load.

In some demonstrative aspects, the one or more EMLSR enablement/disablement criteria, which may be implemented by the selective EMLSR enable/disable mechanism, may include, for example, a self-interference enablement criterion, which may be based on a self-interference parameter. For example, the self-interference parameter may indicate whether self-interference (also referred to as "internal channel interference") from at least one co-located component is present over at least one of a plurality of links between a non-AP MLD, e.g., a non-AP MLD implemented by device 140, and an AP.

In one example, the non-AP MLD may experience interference, which may be caused by another non-Wi-Fi technology, for example, co-located wireless communication interface and/or interference from any other additional or alternative co-located component.

In another example, the non-AP MLD may experience interference which may be caused by activation of a specific component, for example, a co-located electric circuit clock, and/or any other additional or alternative co-located component.

For example, occurrence of the self-interference may be predetermined. According to this example, the non-AP MLD may be configure to select to operate at the non-EMLSR mode, for example, once the channel interference is activated and starts to interfere with one of EMLSR links. For example, the non-AP MLD may select to exit from the EMLSR operation mode to the non-EMLSR MLO mode, e.g., to an ML SU mode, for example, to communicate over a non-EMLSR MLO channel, which is not affected by the interference.

In some demonstrative aspects, the one or more EMLSR enablement/disablement criteria, which may be implemented by the selective EMLSR enable/disable mechanism, may include, for example, an operation-mode enablement criterion, which may be based on an operation-mode parameter. For example, the operation-mode parameter may indicate whether wireless communication with other devices is to be performed over at least one of a plurality of links for the EMLSR operation mode.

In some demonstrative aspects, a non-AP MLD, e.g., a non-AP MLD implemented by device 140, may determine that the operation-mode enablement criterion is met based on a determination that the operation-mode parameter indicates that no wireless communication with other devices is to be performed over any of the plurality of links for the EMLSR operation mode.

For example, the non-AP MLD may be unable to operate in the EMLSR operation mode to listen on two links, for example, when the non-AP MLD is required to operate on different links for one or more other Wi-Fi long duration operations. For example, the non-AP MLD may be required to operate as a multi MAC STA, a Peer-to-peer (P2P) STA, a software enabled access point (SoftAP) and/or any other type of STA, which may be enabled to operate on different links for long durations.

For example, the non-AP MLD may utilize one or more, e.g., all, receive and transmit chains for one or more other Wi-Fi operations. According to this example, during this time, the non-AP MLD may be unable to operate at the EMLSR operation mode to listen on two links, e.g., even if the links are the same. Accordingly, in such cases, the non-AP MLD may, e.g., will, exit the EMLSR operation mode or may use EMLSR availability periods, for example, by using a Target Wake Time (TWT) mechanism, a Power Save (PS) mechanism, and/or any other additional or alternative mechanism.

For example, a non-AP MLD, e.g., a non-AP MLD implemented by device 140, which supports selective enabling/disabling of the EMLSR operation mode based on the channel-load-by-others parameter, may operate at the EMLSR operation mode, and may select to exit the EMLSR operation mode, for example, once a P2P functionality or a soft AP functionality is activated.

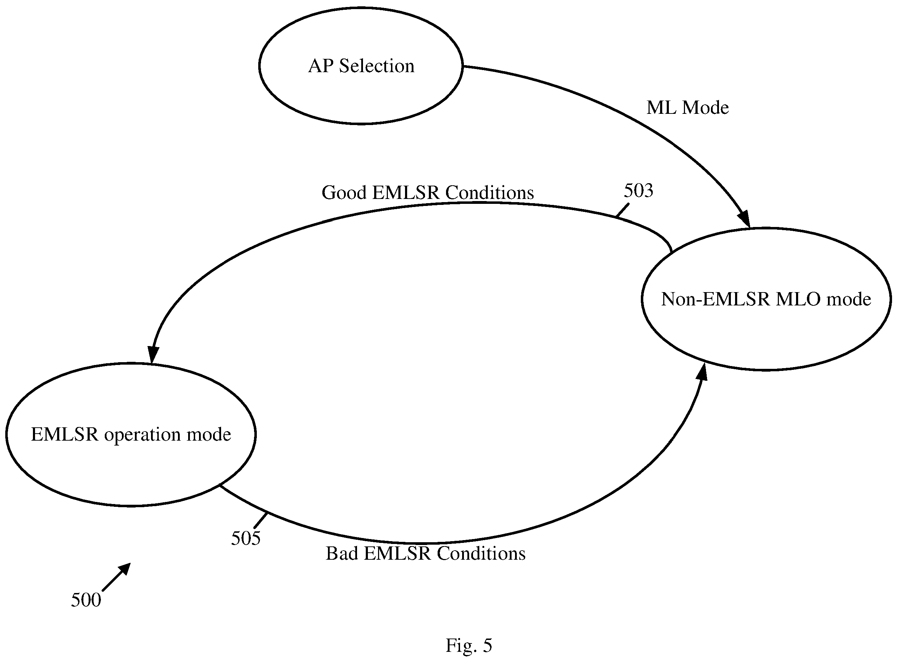

Reference is made to Fig. 5, which schematically illustrates a state diagram 500 to enable/disable an EMLSR operation mode, in accordance with some demonstrative aspects.

For example, a non-AP MLD, e.g., a non-AP MLD implemented by device 140 (Fig. 1), may perform one or more operations of state diagram 500.

For example, as shown in Fig. 5, the non-AP MLD may be at an ML mode, e.g., a Multi-Link (ML) Single User (SU) mode.

For example, the non-AP MLD may enter an EMLSR operation mode, for example, based on a determination that one or more, e.g., all, criteria in a plurality of predefined EMLSR enablement criteria ("in-transition criteria") are fulfilled.

For example, as indicated by arrow 503, the non-AP MLD may switch to the EMLSR operation mode, for example, when the EMLSR enablement criteria are fulfilled (good EMLSR conditions).

For example, the non-AP MLD may exit the EMLSR operation mode, for example, when at least one of a plurality of EMLSR disablement criteria ("out-transition criteria") is fulfilled.

For example, as indicated by arrow 505, the STA may switch to the non-EMLSR MLO mode, for example, when at least one of the EMLSR disablement criteria is fulfilled (bad EMLSR conditions).

For example, the non-AP MLD may determine to not enter the EMLSR operation mode, for example, when at least one of the EMLSR disablement criteria is fulfilled.

For example, the non-AP MLD may use the in-transition criteria, e.g., to enter or exit the EMLSR operation mode, and/or the out-transition criteria, e.g., to exit the EMLSR operation mode, for example, to operate in conditions which may optimize overall system performance, for example, by gaining TpT and/or latency.

For example, the non-AP MLD may use one or more of the following criteria as the in-transition criteria and/or the out-transition criteria to transition between the non-EMLSR mode and the EMLS operation mode:
- Good or Bad Reception. For example, the non-AP MLD may enter the EMLSR operation mode at good reception conditions, e.g., as described above. For example, the non-AP MLD may exit or not enter the EMLSR operation mode at bad reception conditions, e.g., as described above.
- "Channel Load (occupancy) by Others". For example, the non-AP MLD may enter the EMLSR operation mode, for example, when there is a channel load (e.g., excluding load made by the non-AP MLD, which is above a predefined threshold, e.g., as described above.
- Traffic per link. For example, the non-AP MLD may exit the EMLSR operation mode, for example, if data traffic of the AP-MLD is not split over two links, e.g., as described above.
- Power vs TpT/Latency. For example, the non-AP MLD may enter or exit the EMLSR operation mode, for example, as a function of power, TpT, latency, and/or any other additional or alternative criterion, e.g., as described above.
- Internal Channel Interference. For example, the non-AP MLD may exit the EMLSR operation mode, for example, if there is high interference from at least one co-located component (on the same board or die) on one of the channels (links), e.g., as described above.
- Device Operation Mode. For example, the non-AP MLD may exit the EMLSR operation mode, or may select not enter the EMLSR operation mod, for example, when one of the links is required for other Wi-Fi long duration operations, e.g., Multi MAC, P2P or Soft AP, e.g., as described above.

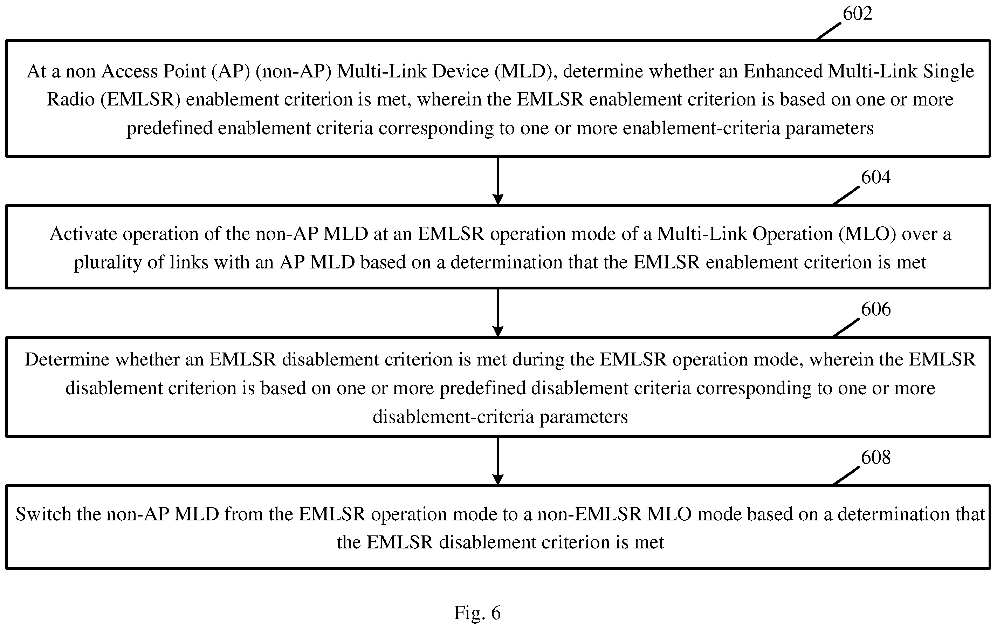

Reference is made to Fig. 6, which schematically illustrates a method of multi-link wireless communication, in accordance with some demonstrative aspects. For example, one or more of the operations of the method of Fig. 6 may be performed by one or more elements of a system, e.g., system 100 (Fig. 1), for example, one or more wireless devices, e.g., device 102 (Fig. 1), and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 602, the method may include determining, at a non-AP MLD, whether an EMLSR enablement criterion is met. For example, the EMLSR enablement criterion may be based on one or more predefined enablement criteria corresponding to one or more enablement-criteria parameters. For example, controller 154 (Fig. 1) may be configured to cause, trigger, and/or control device 140 (Fig. 1) to determine whether the EMLSR enablement criterion is met, e.g., as described above.

As indicated at block 604, the method may include activating operation of the non-AP MLD at an EMLSR operation mode of an MLO over a plurality of links with an AP MLD, for example, based on a determination that the EMLSR enablement criterion is met. For example, controller 154 (Fig. 1) may be configured to cause, trigger, and/or control device 140 (Fig. 1) to activate operation of the non-AP MLD at the EMLSR operation mode, for example, based on a determination that the EMLSR enablement criterion is met, e.g., as described above.

As indicated at block 606, the method may include determining whether an EMLSR disablement criterion is met during the EMLSR operation mode. For example, the EMLSR disablement criterion may be based on one or more predefined disablement criteria corresponding to one or more disablement-criteria parameters. For example, controller 154 (Fig. 1) may be configured to cause, trigger, and/or control device 140 (Fig. 1) to determine whether the EMLSR disablement criterion is met during the EMLSR operation mode, e.g., as described above.

As indicated at block 608, the method may include switching the non-AP MLD from the EMLSR operation mode to a non-EMLSR MLO mode, for example, based on a determination that the EMLSR disablement criterion is met. For example, controller 154 (Fig. 1) may be configured to cause, trigger, and/or control device 140 (Fig. 1) to switch the non-AP MLD from the EMLSR operation mode to the non-EMLSR MLO mode, for example, based on a determination that the EMLSR disablement criterion is met, e.g., as described above.

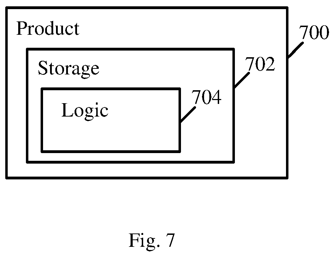

Reference is made to Fig. 7, which schematically illustrates a product of manufacture 700, in accordance with some demonstrative aspects. Product 700 may include one or more tangible computer-readable ("machine-readable") non-transitory storage media 702, which may include computer-executable instructions, e.g., implemented by logic 704, operable to, when executed by at least one computer processor, enable the at least one computer processor to implement one or more operations at device 102 (Fig. 1), device 140 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, 3, 4, 5, and/or 6, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 700 and/or machine readable storage media 702 may include one or more types of computer-readable storage media capable of storing data, including volatile memory, non-volatile memory, removable or non-removable memory, erasable or non-erasable memory, writeable or re-writeable memory, and the like. For example, machine readable storage media 702 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 704 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 704 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

The following examples pertain to further aspects.

Example 1 includes an apparatus comprising logic and circuitry configured to cause a non Access Point (AP) (non-AP) Multi-Link Device (MLD) to determine whether an Enhanced Multi-Link Single Radio (EMLSR) enablement criterion is met, wherein the EMLSR enablement criterion is based on one or more predefined enablement criteria corresponding to one or more enablement-criteria parameters; based on a determination that the EMLSR enablement criterion is met, activate operation of the non-AP MLD at an EMLSR operation mode of a Multi-Link Operation (MLO) over a plurality of links with an AP MLD; determine whether an EMLSR disablement criterion is met during the EMLSR operation mode, wherein the EMLSR disablement criterion is based on one or more predefined disablement criteria corresponding to one or more disablement-criteria parameters; and based on a determination that the EMLSR disablement criterion is met, switch the non-AP MLD from the EMLSR operation mode to a non-EMLSR MLO mode.

Example 2 includes the subject matter of Example 1, and optionally, wherein the one or more predefined enablement criteria comprises a channel-load-by-others enablement criterion based on a channel-load-by-others parameter representing a channel load due to traffic communicated by other devices over a channel used by the non-AP STA for communicating with the AP MLD.

Example 3 includes the subject matter of Example 2, and optionally, wherein the apparatus is configured to cause the non-AP MLD to determine that the channel-load-by-others enablement criterion is met based on a determination that a value of the channel-load-by-others parameter is greater than a channel-load-by-others threshold.

Example 4 includes the subject matter of any one of Examples 1-3, and optionally, wherein the one or more predefined enablement criteria comprises a reception-performance enablement criterion based on a reception-performance parameter representing a performance level for reception of communications from the AP MLD at the non-AP MLD.

Example 5 includes the subject matter of Example 4, and optionally, wherein the apparatus is configured to cause the non-AP MLD to determine that the reception-performance enablement criterion is met based on a determination that a value of the reception-performance parameter is greater than a reception-performance threshold.

Example 6 includes the subject matter of any one of Examples 1-5, and optionally, wherein the one or more predefined enablement criteria comprises a power-based enablement criterion based on a power-based parameter representing a relationship between a first power consumption level and a second power consumption level, the first power consumption level comprising a power consumption of the non-AP MLD for communicating a particular traffic with the AP MLD at the EMLSR operation mode, the second power consumption level comprising a power consumption of the non-AP MLD for communicating the particular traffic with the AP MLD at the non-EMLSR MLO mode.

Example 7 includes the subject matter of Example 6, and optionally, wherein the apparatus is configured to cause the non-AP MLD to determine that the power-based enablement criterion is met based on a determination that a value of the power-based parameter represents a situation where the first power consumption level is less than the second power consumption level.

Example 8 includes the subject matter of any one of Examples 1-7, and optionally, wherein the one or more predefined enablement criteria comprises a latency-based enablement criterion based on a latency-based parameter representing a relationship between a first latency and a second latency, the first latency comprising a latency for communicating a particular traffic with the AP MLD at the EMLSR operation mode, the second latency comprising a latency for communicating the particular traffic with the AP MLD at the non-EMLSR MLO mode.

Example 9 includes the subject matter of Example 8, and optionally, wherein the apparatus is configured to cause the non-AP MLD to determine that the latency-based enablement criterion is met based on a determination that a value of the latency-based parameter represents a situation where the first latency is less than the second latency.

Example 10 includes the subject matter of any one of Examples 1-9, and optionally, wherein the one or more predefined enablement criteria comprises a self-interference enablement criterion based on a self-interference parameter to indicate whether self-interference from at least one co-located component is present over at least one of the plurality of links, wherein the at least one co-located component comprises at least one of a co-located wireless communication interface or a co-located electric circuit clock.

Example 11 includes the subject matter of Example 10, and optionally, wherein the apparatus is configured to cause the non-AP MLD to determine that the self-interference enablement criterion is met based on a determination that the self-interference parameter indicates that there is no self-interference over any of the plurality of links.

Example 12 includes the subject matter of any one of Examples 1-11, and optionally, wherein the one or more predefined enablement criteria comprises an operation-mode enablement criterion based on an operation-mode parameter to indicate whether wireless communication with other devices is to be performed over at least one of the plurality of links.

Example 13 includes the subject matter of Example 12, and optionally, wherein the apparatus is configured to cause the non-AP MLD to determine that the operation-mode enablement criterion is met based on a determination that the operation-mode parameter indicates that no wireless communication with other devices is to be performed over any of the plurality of links.

Example 14 includes the subject matter of any one of Examples 1-13, and optionally, wherein the one or more predefined disablement criteria comprises a channel-load-by-others disablement criterion based on a channel-load-by-others parameter representing a channel load due to traffic communicated by other devices over a channel used by the non-AP STA for communicating with the AP MLD.

Example 15 includes the subject matter of Example 14, and optionally, wherein the apparatus is configured to cause the non-AP MLD to determine that the channel-load-by-others disablement criterion is met based on a determination that a value of the channel-load-by-others parameter is lower than a channel-load-by-others threshold.

Example 16 includes the subject matter of any one of Examples 1-15, and optionally, wherein the one or more predefined disablement criteria comprises a reception-performance disablement criterion based on a reception-performance parameter representing a performance level for reception of communications from the AP MLD at the non-AP MLD.

Example 17 includes the subject matter of Example 16, and optionally, wherein the apparatus is configured to cause the non-AP MLD to determine that the reception-performance disablement criterion is met based on a determination that a value of the reception performance parameter is lower than a reception performance threshold.

Example 18 includes the subject matter of any one of Examples 1-17, and optionally, wherein the one or more predefined disablement criteria comprises a power-based disablement criterion based on a power-based parameter representing a relationship between a first power consumption level and a second power consumption level, the first power consumption level comprising a power consumption of the non-AP MLD for communicating a particular traffic with the AP MLD at the EMLSR operation mode, the second power consumption level comprising a power consumption of the non-AP MLD for communicating the particular traffic with the AP MLD at the non-EMLSR MLO mode.

Example 19 includes the subject matter of Example 18, and optionally, wherein the apparatus is configured to cause the non-AP MLD to determine that the power-based disablement criterion is met based on a determination that a value of the power-based parameter represents a situation where the second power consumption level is less than the first power consumption level.

Example 20 includes the subject matter of any one of Examples 1-19, and optionally, wherein the one or more predefined disablement criteria comprises a latency-based disablement criterion based on a latency-based parameter representing a relationship between a first latency and a second latency, the first latency comprising a latency for communicating a particular traffic with the AP MLD at the EMLSR operation mode, the second latency comprising a latency for communicating the particular traffic with the AP MLD at the non-EMLSR MLO mode.

Example 21 includes the subject matter of Example 20, and optionally, wherein the apparatus is configured to cause the non-AP MLD to determine that the latency-based disablement criterion is met based on a determination that a value of the latency-based parameter represents a situation where the second latency is less than the first latency.

Example 22 includes the subject matter of any one of Examples 1-21, and optionally, wherein the one or more predefined disablement criteria comprises a self-interference disablement criterion based on a self-interference parameter to indicate whether self-interference from at least one co-located component is present over at least one of the plurality of links, wherein the at least one co-located component comprises at least one of a co-located wireless communication interface or a co-located electric circuit clock.

Example 23 includes the subject matter of Example 22, and optionally, wherein the apparatus is configured to cause the non-AP MLD to determine that the self-interference disablement criterion is met based on a determination that the self-interference parameter indicates that there is self-interference over at least one of the plurality of links.

Example 24 includes the subject matter of any one of Examples 1-23, and optionally, wherein the one or more predefined disablement criteria comprises an operation-mode disablement criterion based on an operation-mode parameter to indicate whether wireless communication with other devices is to be performed over at least one of the plurality of links.

Example 25 includes the subject matter of Example 24, and optionally, wherein the apparatus is configured to cause the non-AP MLD to determine that the operation-mode disablement criterion is met based on a determination that the operation-mode parameter indicates that wireless communication with other devices is to be performed over at least one of the plurality of links.

Example 26 includes the subject matter of any one of Examples 1-25, and optionally, wherein the apparatus is configured to cause the non-AP MLD to transmit an EMLSR enablement indication to the AP MLD based on the determination that the EMLSR enablement criterion is met.

Example 27 includes the subject matter of any one of Examples 1-26, and optionally, wherein the apparatus is configured to cause the non-AP MLD to transmit an EMLSR disablement indication to the AP MLD based on the determination that the EMLSR disablement criterion is met.

Example 28 includes the subject matter of any one of Examples 1-27, and optionally, wherein the apparatus is configured to cause the non-AP MLD to monitor the one or more disablement-criteria parameters in real time during operation of the non-AP MLD at the EMLSR operation mode, and to monitor the one or more enablement-criteria parameters in real time during operation of the non-AP MLD at the non-EMLSR MLO mode.

Example 29 includes the subject matter of any one of Examples 1-28, and optionally, wherein the apparatus is configured to cause the non-AP MLD to determine that the EMLSR enablement criterion is met based on a determination that a plurality of predefined enablement criteria corresponding to a plurality of predefined enablement-criteria parameters are met.

Example 30 includes the subject matter of Example 29, and optionally, wherein the apparatus is configured to cause the non-AP MLD to determine that the EMLSR enablement criterion is met based only on a determination that all predefined enablement criteria in the plurality of predefined enablement criteria are met.

Example 31 includes the subject matter of any one of Examples 1-30, and optionally, wherein the apparatus is configured to cause the non-AP MLD to determine that the EMLSR disablement criterion is met based on a determination that at least one predefined disablement criterion in a plurality of predefined disablement criteria is met.

Example 32 includes the subject matter of any one of Examples 1-31, and optionally, wherein the apparatus is configured to cause the non-AP MLD to determine that the EMLSR enablement criterion is met based only on a determination that all predefined enablement criteria in a plurality of predefined enablement criteria are met, and to determine that the EMLSR disablement criterion is met based on a determination that at least one predefined disablement criterion in a plurality of predefined disablement criteria is met.

Example 33 includes the subject matter of any one of Examples 1-32, and optionally, comprising a radio to communicate traffic with the AP MLD.

Example 34 includes the subject matter of Example 33, and optionally, comprising one or more antennas connected to the radio, and a processor to execute instructions of an operating system of the non-AP MLD.

Example 35 includes a wireless communication device comprising the apparatus of any of Examples 1-34.

Example 36 includes a mobile device comprising the apparatus of any of Examples 1-34.

Example 37 includes an apparatus comprising means for executing any of the described operations of any of Examples 1-34.

Example 38 includes a product comprising one or more tangible computer-readable non-transitory storage media comprising instructions operable to, when executed by at least one processor, enable the at least one processor to cause a wireless communication device to perform any of the described operations of any of Examples 1-34.

Example 39 includes an apparatus comprising: a memory interface; and processing circuitry configured to: perform any of the described operations of any of Examples 1-34.

Example 40 includes a method comprising any of the described operations of any of Examples 1-34.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a non Access Point , AP, non-AP, Multi-Link Device ,MLD, the method comprising:
determining whether an Enhanced Multi-Link Single Radio ,EMLSR, enablement criterion is met, wherein the EMLSR enablement criterion is based on one or more predefined enablement criteria corresponding to one or more enablement-criteria parameters;
based on a determination that the EMLSR enablement criterion is met, activating operation of the non-AP MLD at an EMLSR operation mode of a Multi-Link Operation ,MLO, over a plurality of links with an AP MLD;
determining whether an EMLSR disablement criterion is met during the EMLSR operation mode, wherein the EMLSR disablement criterion is based on one or more predefined disablement criteria corresponding to one or more disablement-criteria parameters; and
based on a determination that the EMLSR disablement criterion is met, switching the non-AP MLD from the EMLSR operation mode to a non-EMLSR MLO mode.

2. The method of claim 1, wherein the one or more predefined enablement criteria comprises a channel-load-by-others enablement criterion based on a channel-load-by-others parameter representing a channel load due to traffic communicated by other devices over a channel used by the non-AP STA for communicating with the AP MLD.

3. The method of claim 2 comprising determining that the channel-load-by-others enablement criterion is met based on a determination that a value of the channel-load-by-others parameter is greater than a channel-load-by-others threshold.

4. The method of any one of claims 1-3, wherein the one or more predefined enablement criteria comprises a reception-performance enablement criterion based on a reception-performance parameter representing a performance level for reception of communications from the AP MLD at the non-AP MLD.

5. The method of any one of claims 1-4, wherein the one or more predefined enablement criteria comprises a power-based enablement criterion based on a power-based parameter representing a relationship between a first power consumption level and a second power consumption level, the first power consumption level comprising a power consumption of the non-AP MLD for communicating a particular traffic with the AP MLD at the EMLSR operation mode, the second power consumption level comprising a power consumption of the non-AP MLD for communicating the particular traffic with the AP MLD at the non-EMLSR MLO mode.

6. The method of claim 5 comprising determining that the power-based enablement criterion is met based on a determination that a value of the power-based parameter represents a situation where the first power consumption level is less than the second power consumption level.

7. The method of any one of claims 1-6, wherein the one or more predefined enablement criteria comprises a latency-based enablement criterion based on a latency-based parameter representing a relationship between a first latency and a second latency, the first latency comprising a latency for communicating a particular traffic with the AP MLD at the EMLSR operation mode, the second latency comprising a latency for communicating the particular traffic with the AP MLD at the non-EMLSR MLO mode.

8. The method of any one of claims 1-7, wherein the one or more predefined enablement criteria comprises a self-interference enablement criterion based on a self-interference parameter to indicate whether self-interference from at least one co-located component is present over at least one of the plurality of links, wherein the at least one co-located component comprises at least one of a co-located wireless communication interface or a co-located electric circuit clock, and/or wherein the one or more predefined enablement criteria comprises an operation-mode enablement criterion based on an operation-mode parameter to indicate whether wireless communication with other devices is to be performed over at least one of the plurality of links, and/or

9. The method of any one of claims 1-8, wherein the one or more predefined disablement criteria comprises a channel-load-by-others disablement criterion based on a channel-load-by-others parameter representing a channel load due to traffic communicated by other devices over a channel used by the non-AP STA for communicating with the AP MLD.

10. The method of any one of claims 1-9, wherein the one or more predefined disablement criteria comprises a power-based disablement criterion based on a power-based parameter representing a relationship between a first power consumption level and a second power consumption level, the first power consumption level comprising a power consumption of the non-AP MLD for communicating a particular traffic with the AP MLD at the EMLSR operation mode, the second power consumption level comprising a power consumption of the non-AP MLD for communicating the particular traffic with the AP MLD at the non-EMLSR MLO mode, and/or wherein the one or more predefined disablement criteria comprises a latency-based disablement criterion based on a latency-based parameter representing a relationship between a first latency and a second latency, the first latency comprising a latency for communicating a particular traffic with the AP MLD at the EMLSR operation mode, the second latency comprising a latency for communicating the particular traffic with the AP MLD at the non-EMLSR MLO mode.

11. The method of any one of claims 1-10 comprising transmitting an EMLSR enablement indication to the AP MLD based on the determination that the EMLSR enablement criterion is met, and/or transmitting an EMLSR disablement indication to the AP MLD based on the determination that the EMLSR disablement criterion is met.

12. The method of any one of claims 1-11 comprising determining that the EMLSR enablement criterion is met based only on a determination that all predefined enablement criteria in a plurality of predefined enablement criteria are met, and determining that the EMLSR disablement criterion is met based on a determination that at least one predefined disablement criterion in a plurality of predefined disablement criteria is met.

13. An apparatus comprising a controller configured to cause a non Access Point ,AP, non-AP, Multi-Link Device ,MLD, to perform the method of any one of claims 1-12.

14. The apparatus of claim 13 comprising a radio to communicate traffic with the AP MLD, one or more antennas connected to the radio, and a processor to execute instructions of an operating system of the non-AP MLD.

15. A product comprising one or more tangible computer-readable non-transitory storage media comprising instructions operable to, when executed by at least one processor, enable the at least one processor to cause a non Access Point ,AP, non-AP, Multi-Link Device ,MLD, to perform the method of any one of claims 1-12.
